(19)

Europäisches
Patentamt
European
Patent Office
Office européen
des brevets

(11) **EP 4 553 824 A1**

(12) **EUROPEAN PATENT APPLICATION**

(43) Date of publication:
**14.05.2025 Bulletin 2025/20**

(21) Application number: **24202138.4**

(22) Date of filing: **24.09.2024**

(51) International Patent Classification (IPC):
**G10K 15/02** (2006.01)　　**B60Q 5/00** (2006.01)

(52) Cooperative Patent Classification (CPC):
**G10K 15/02; B60Q 5/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 JP 2023192933**

(71) Applicant: **TOYOTA JIDOSHA KABUSHIKI KAISHA**
**Toyota-shi**
**Aichi 471-8571 (JP)**

(72) Inventors:
• **HARA, Yoshikazu**
**Toyota-shi, 471-8571 (JP)**
• **YAMANAKA, Tomio**
**Toyota-shi, 471-8571 (JP)**
• **HIRAIWA, Hiroshi**
**Toyota-shi, 471-8571 (JP)**
• **FUKUHARA, Chie**
**Toyota-shi, 471-8571 (JP)**

(74) Representative: **TBK**
**Bavariaring 4-6**
**80336 München (DE)**

(54) **VEHICLE CONTROL METHOD, VEHICLE CONTROL DEVICE, AND BATTERY ELECTRIC VEHICLE**

(57)　　A vehicle control method includes: a processor (102) generating a pseudo engine sound to be output from a cabin speaker (14) of a battery electric vehicle (10) based on operation information for a constituent element of the battery electric vehicle (10); the processor (102) adjusting a sound pressure of the pseudo engine sound based on a time period to which a present time belongs, and outputting the pseudo engine sound from the cabin speaker (14); and the processor (102) making an adjustment so as to reduce the sound pressure of the pseudo engine sound when the present time belongs to a night time period, compared to when the present time belongs to a day time period.

**FIG. 6**

```
        START
          │
          │ S11
          ▼
    ACQUIRE BEV
          │
          │ S12
          ▼
    GENERATE EGS
          │
          │ S13
          ▼
   ADJUST SOUND
   PRESSURE BASED
      ON MDF
          │
          │ S14
          ▼
    OUTPUT EGS
    TO SPEAKER
          │
          ▼
       RETURN
```

EP 4 553 824 A1

**Description**

BACKGROUND OF THE INVENTION

1. Field of the Invention

The present disclosure relates to a technique to be applied to a battery electric vehicle that uses an electric motor as a power unit for travel.

2. Description of Related Art

Japanese Unexamined Patent Application Publication No. 2011-215437 (JP 2011-215437 A) discloses a sound control device mounted on a vehicle that can be driven by an electric motor. The sound control device computes an engine rotational speed of a virtual engine based on travel information on the vehicle and the result of simulating operation of a constituent member of a virtual engine vehicle. The sound control device also controls a virtual engine sound for a vehicle cabin based on the computed engine rotational speed. In controlling the virtual engine sound, a sound effect corresponding to operation of the constituent member of the virtual engine vehicle is determined based on the result of simulating this operation. Then, the determined sound effect is added to the virtual engine sound.

Besides JP 2011-215437 A, Japanese Unexamined Patent Application Publication No. 2014-240239 (JP 2014-240239 A) can be indicated as an example of documents that indicate the state of the art in the technical field related to the present disclosure.

SUMMARY OF THE INVENTION

When a sound effect corresponding to operation of the constituent member of the virtual engine vehicle is added to the virtual engine sound, a driver of the vehicle is provided with an ambiance that makes him/her feel as if he/she were driving a real engine vehicle. Meanwhile, the driver of the vehicle is required to safely drive the vehicle that he/she is driving, and there is also assumed a situation in which priority should not be given to providing such an ambiance. During a night time period, in particular, the field of view of the driver tends to be narrow compared to that during a day time period, and thus rendition of the ambiance may affect safe driving. Thus, the above sound control device has room for improvement from this point of view.

The present disclosure has been made in view of the above issue. The present disclosure supports a driver in driving safely while providing the driver with an ambiance due to a pseudo engine sound output to a cabin of a vehicle that can be driven by an electric motor when such a pseudo engine sound is output.

A first aspect of the present disclosure provides a vehicle control method to be applied to a battery electric vehicle that uses an electric motor as a power unit for travel. The vehicle control method includes: generating, by the processor, a pseudo engine sound to be output from a cabin speaker of the battery electric vehicle based on operation information for a constituent element of the battery electric vehicle; and adjusting, by the processor, a sound pressure of the pseudo engine sound based on a time period to which a present time belongs, and outputting the pseudo engine sound from the cabin speaker. The vehicle control method also includes making, by the processor, an adjustment so as to reduce the sound pressure of the pseudo engine sound when the present time belongs to a night time period, compared to when the present time belongs to a day time period.

A second aspect of the present disclosure provides a vehicle control device to be applied to a battery electric vehicle that uses an electric motor as a power unit for travel. The vehicle control device includes a processor that performs various processes. The processor is configured to generate a pseudo engine sound to be output from a cabin speaker of the battery electric vehicle based on operation information for a constituent element of the battery electric vehicle. The processor is configured to adjust a sound pressure of the pseudo engine sound based on a time period to which a present time belongs, and to output the pseudo engine sound to the cabin speaker. The processor is configured to make an adjustment so as to reduce the sound pressure of the pseudo engine sound when the present time belongs to a night time period, compared to when the present time belongs to a day time period.

A third aspect of the present disclosure provides a battery electric vehicle that uses an electric motor as a power unit for travel. The battery electric vehicle includes a cabin speaker and a processor that performs various processes. The processor is configured to generate a pseudo engine sound to be output from the cabin speaker based on operation information for a constituent element of the battery electric vehicle. The processor is configured to adjust a sound pressure of the pseudo engine sound based on a time period to which a present time belongs, and to output the pseudo engine sound to the cabin speaker. The processor is configured to make an adjustment so as to reduce the sound pressure of the pseudo engine sound when the present time belongs to a night time period, compared to when the present time belongs to a day time period.

According to the present disclosure, an adjustment is made so as to reduce the sound pressure of the pseudo engine sound when the present time belongs to a night time period, compared to when the present time belongs to a day time period, and the pseudo engine sound is output from the cabin speaker. Therefore, it is possible to support a driver in driving safely when the present time belongs to a night time period while providing the driver with an ambiance at all times by outputting the pseudo engine sound.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram illustrating a battery electric vehicle and a vehicle control device according to a first embodiment;
FIG. 2 is a block diagram illustrating an example of the basic functional configuration of the vehicle control device;
FIG. 3 is a block diagram illustrating another example of the basic functional configuration of the vehicle control device;
FIG. 4 is a block diagram illustrating an example of the functional configuration of the vehicle control device particularly related to the first embodiment;
FIG. 5 illustrates an adjustment instruction generated by a time period specifying unit illustrated in FIG. 4;
FIG. 6 is a flowchart illustrating the flow of computer processing particularly related to the first embodiment;
FIG. 7 is a block diagram illustrating a first example of the configuration of a power control system of the battery electric vehicle;
FIG. 8 illustrates respective examples of an engine model, a clutch model, and a transmission model that constitute a manual transmission (MT) vehicle model;
FIG. 9 illustrates the torque characteristics of an electric motor achieved through motor control performed using the MT vehicle model, in comparison to the torque characteristics of an electric motor achieved through normal motor control for a battery electric vehicle;
FIG. 10 is a block diagram illustrating a second example of the configuration of the power control system of the battery electric vehicle;
FIG. 11 is a conceptual diagram illustrating a battery electric vehicle and a vehicle control device according to a second embodiment;
FIG. 12 is a block diagram illustrating an example of the functional configuration of the vehicle control device particularly related to the second embodiment;
FIG. 13 illustrates an example of operation control performed when an assist device illustrated in FIG. 11 is a lighting device; and
FIG. 14 illustrates an example of operation control performed when the assist device illustrated in FIG. 11 is a seat ventilation device.

DETAILED DESCRIPTION OF EMBODIMENTS

Embodiments of the present disclosure will be described with reference to the accompanying drawings. In the drawings, the same or corresponding components are given the same reference signs to simplify or omit the description.

1. First Embodiment

1-1. Overall Configuration and Pseudo Engine Sound

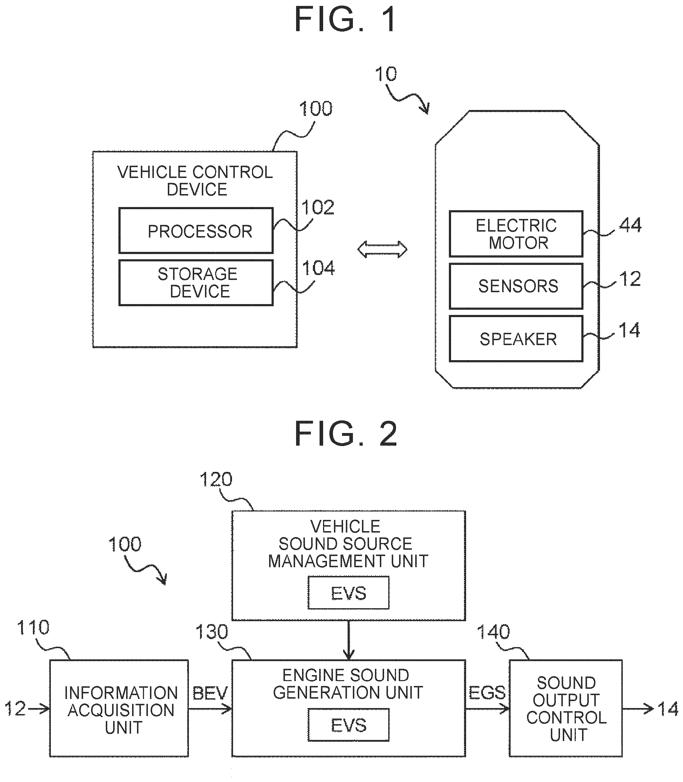

FIG. 1 is a conceptual diagram illustrating a battery electric vehicle 10 according to a first embodiment of the present disclosure and a vehicle control device 100 to be applied to the battery electric vehicle 10. The battery electric vehicle 10 includes an electric motor 44. The electric motor 44 may be a brushless direct-current (DC) motor or a three-phase alternating-current (AC) synchronous motor, for example. The battery electric vehicle 10 uses the electric motor 44 as a power unit for travel.

The battery electric vehicle 10 also includes various sensors 12. Examples of the various sensors 12 include operation state sensors such as an accelerator position sensor, a brake position sensor, and a shift position sensor, and travel state sensors such as a wheel speed sensor, an acceleration sensor, and a rotational speed sensor. The accelerator position sensor detects the amount of operation (accelerator operation amount) of an accelerator pedal. The brake position sensor detects the operation amount of a brake pedal. The shift position sensor detects a shift position. The wheel speed sensor detects the rotational speed of a wheel of the battery electric vehicle 10. The acceleration sensor detects the lateral acceleration and the front-rear acceleration of the battery electric vehicle 10. The rotational speed sensor detects the rotational speed of the electric motor 44.

The various sensors 12 also include a position sensor such as a Global Navigation Satellite System (GNSS) sensor, and a recognition sensor such as a camera, a radar, and a LIDAR (Laser Imaging Detection and Ranging). The GNSS detects the position and the posture of the battery electric vehicle 10. The camera captures at least an image of a view ahead of the battery electric vehicle 10. The radar and the LIDAR recognize a situation around the battery electric vehicle 10.

The battery electric vehicle 10 also includes a speaker 14. The speaker 14 corresponds to the "cabin speaker" according to the present disclosure. The speaker 14 outputs a sound into a vehicle cabin of the battery electric vehicle 10. The speaker 14 includes a front speaker provided in the front of the vehicle cabin, and a rear speaker provided in the rear of the vehicle cabin, for example. The total number of speakers that constitute the speaker 14 and the layout of the speaker 14 are changeable as desired.

The vehicle control device 100 generates a sound (hereinafter also referred to as a "cabin sound") to be output from the speaker 14. In addition, the vehicle control device 100 outputs the generated cabin sound from the speaker 14. For example, the vehicle control device 100 generates a pseudo engine sound as the cabin sound, and outputs the generated cabin sound from the speaker 14. In another example, the vehicle control device 100 generates a cabin sound including a pseudo engine sound, and outputs the generated cabin sound from the speaker 14.

The entire vehicle control device 100 may be mounted on the battery electric vehicle 10. In another example, at least a part of the vehicle control device 100 may be included in a management server that is external to the battery electric vehicle 10. In that case, the vehicle control device 100 may remotely generate a cabin sound, receive the generated cabin sound, and output the cabin sound from the speaker 14.

In general, the vehicle control device 100 includes at least one processor 102 and at least one storage device 104. The processor 102 executes various processes. Examples of the processor 102 include a central processing unit (CPU), a graphics processing unit (GPU), an application specific integrated circuit (ASIC), and a field programmable gate array (FPGA). The storage device 104 stores various types of information. Examples of the storage device 104 include a volatile memory, a non-volatile memory, a hard disk drive (HDD), and a solid state drive (SSD).

FIG. 2 is a block diagram illustrating an example of the basic functional configuration of the vehicle control device 100. The vehicle control device 100 includes, as functional blocks, an information acquisition unit 110, a vehicle sound source management unit 120, an engine sound generation unit 130, and a sound output control unit 140. These functional blocks are implemented through cooperation of the processor 102 and the storage device 104, for example.

The information acquisition unit 110 acquires information BEV about the battery electric vehicle 10. The information BEV includes information about the travel state of the battery electric vehicle 10, information about the travel environment of the battery electric vehicle 10, etc. The information BEV is typically detected, for example, by the various sensors 12. A part of the information about the travel environment of the battery electric vehicle 10 may be acquired by combining information detected by the various sensors 12 (e.g. position information on the battery electric vehicle 10) with map data.

The information BEV also includes a virtual engine rotational speed Ne. Here, it is assumed that the battery electric vehicle 10 uses a virtual engine as a power unit for travel. The virtual engine rotational speed Ne is the rotational speed of the virtual engine at the time when it is assumed that the battery electric vehicle 10 is driven by the virtual engine. For example, the information acquisition unit 110 may calculate the virtual engine rotational speed Ne so as to increase as the wheel speed increases. When the battery electric vehicle 10 includes a manual mode (MT mode) to be discussed later, meanwhile, the information acquisition unit 110 may calculate the virtual engine rotational speed Ne in the manual mode based on the wheel speed, a total speed reduction ratio, and the slip rate of a virtual clutch. The method of calculating the virtual engine rotational speed Ne in the manual mode will be discussed in detail later.

The vehicle sound source management unit 120 stores engine vehicle sound source data EVS that are used to generate a pseudo engine sound. The vehicle sound source management unit 120 is mainly implemented by the storage device 104. Typically, the sound source data EVS include a plurality of types of sound source data. Examples of the types of sound source data include sound source data (for low rotational speed, medium rotational speed, and high rotational speed) on sounds due to engine combustion, sound source data (for low rotational speed, medium rotational speed, and high rotational speed) on sounds due to operations of input devices such as a gear and a clutch, sound source data on noise sounds, and sound source data on event sounds (e.g. engine stall sound). The sound source data are generated in advance through simulations etc. based on an engine model and a vehicle model of an engine vehicle. The sound source data are flexibly adjustable. That is, at least one of the sound pressure and the frequency of sounds represented by the sound source data is flexibly adjustable.

The engine sound generation unit 130 (engine sound simulator) is a simulator that generates a pseudo engine sound. The engine sound generation unit 130 acquires at least a part of the information BEV from the information acquisition unit 110. In particular, the engine sound generation unit 130 acquires information on the virtual engine rotational speed Ne and the vehicle speed from the information acquisition unit 110. The engine sound generation unit 130 also reads the engine vehicle sound source data EVS from the vehicle sound source management unit 120. Then, the engine sound generation unit 130 generates a pseudo engine sound that matches the driving state (virtual engine rotational speed Ne and vehicle speed) of the battery electric vehicle 10 by combining one or more sound source data included in the engine vehicle sound source data EVS. Engine sound data EGS are data that represent the generated pseudo engine sound.

Generation of a pseudo engine sound is a well-known technique, and the method of generating a pseudo engine sound that is applicable to the present disclosure is not specifically limited. For example, a pseudo engine sound may be generated by a well-known engine sound simulator adopted in games etc. A map of the virtual engine rotational speed Ne and the frequency and a map of virtual engine torque and the sound pressure may be prepared, and the frequency of the pseudo engine sound may be increased and decreased in proportion to the virtual engine rotational speed Ne and the sound pressure of the pseudo engine sound may be increased and decreased in proportion to the virtual engine torque.

The sound output control unit 140 receives the engine sound data EGS generated by the engine sound generation unit 130. Then, the sound output control unit 140 outputs the engine sound data EGS from the speaker 14. When outputting the engine sound data EGS, the sound output control unit 140 controls the sound pressure of the pseudo engine sound by controlling an amplifier. In addition, the sound output control unit 140 varies the frequency of the pseudo engine sound by controlling a frequency modulation circuit (FMC).

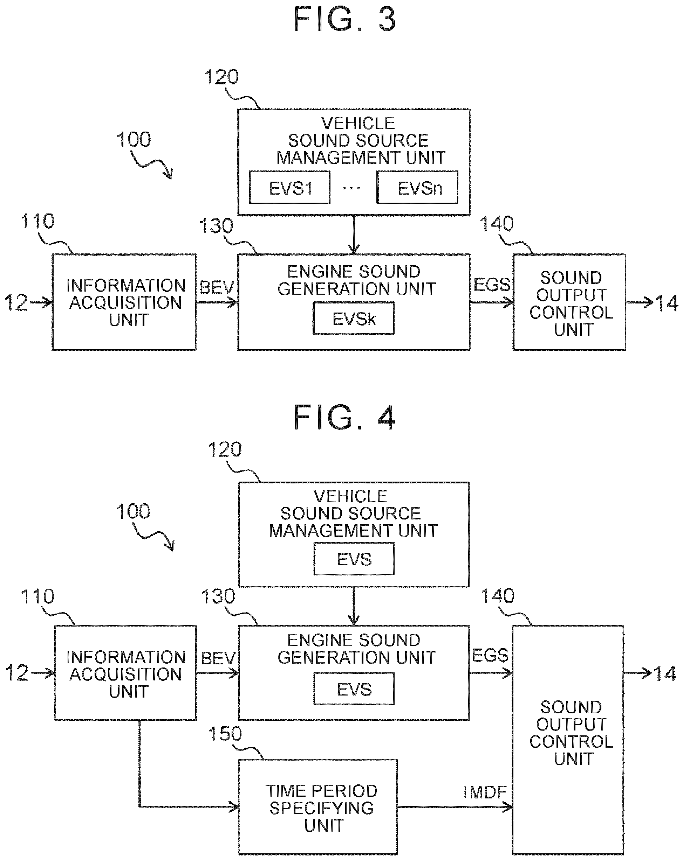

FIG. 3 is a block diagram illustrating another example of the basic functional configuration of the vehicle control device 100. In the example illustrated in FIG. 3, the vehicle sound source management unit 120 stores a plurality of types of engine vehicle sound source data EVS (EVS1, ..., EVSn) respectively corresponding to a plurality of vehicle types (1, ..., n). That is, the vehicle sound source management unit 120 stores engine vehicle sound source data EVS for each vehicle type. The sound source data EVSk ($1 \leq k \leq n$) are generated in advance based on the engine model and the vehicle model for the corresponding vehicle type. The driver may specify his/her favorite vehicle type from among a plurality of vehicle types. In that case, the engine sound generation unit 130 acquires sound source data EVSk corresponding to the vehicle type specified by the driver. Then, the engine sound generation unit 130 generates a pseudo engine sound using the acquired engine vehicle sound source data EVSk. This allows the driver to feel as if he/she were driving a vehicle of his/her favorite type.

1-2. Adjustment of Pseudo Engine Sound

When the pseudo engine sound is output from the speaker 14, the driver of the battery electric vehicle 10 is provided with an ambiance that makes him/her feel as if he/she were driving a real engine vehicle. Meanwhile, the driver is required to drive attentively and safely with consideration for the surroundings of the battery electric vehicle 10. During a night time period, in particular, the field of view of the driver tends to be narrow compared to that during a day time period. Therefore, rendition of the ambiance may affect safe driving by the driver. Thus, in the first embodiment, the sound pressure of a pseudo engine sound produced when the engine sound data EGS are output from the speaker 14 is adjusted based on the time period to which the present time belongs.

FIG. 4 is a block diagram illustrating an example of the functional configuration of the vehicle control device 100 particularly related to the first embodiment; In the example illustrated in FIG. 4, the vehicle control device 100 includes a time period specifying unit 150, in addition to the functional blocks illustrated in FIG. 2. These functional blocks are implemented through cooperation of the processor 102 and the storage device 104, for example.

The time period specifying unit 150 specifies the time period to which the present time belongs. Examples of the time period include a day time period and a night time period. For example, the day time period is from 6 am to 8 pm, and the night time period is from 8 pm to 6 am. The times at the boundary between the day time period and the night time period may be adjusted as appropriate based on position information on the battery electric vehicle 10 and information on the sunset and sunrise times. The day time period may include a morning time period and an evening time period. The time period specifying unit 150 generates an adjustment instruction MDF based on the result of specifying the time period to which the present time belongs, and transmits the adjustment instruction MDF to the sound output control unit 140.

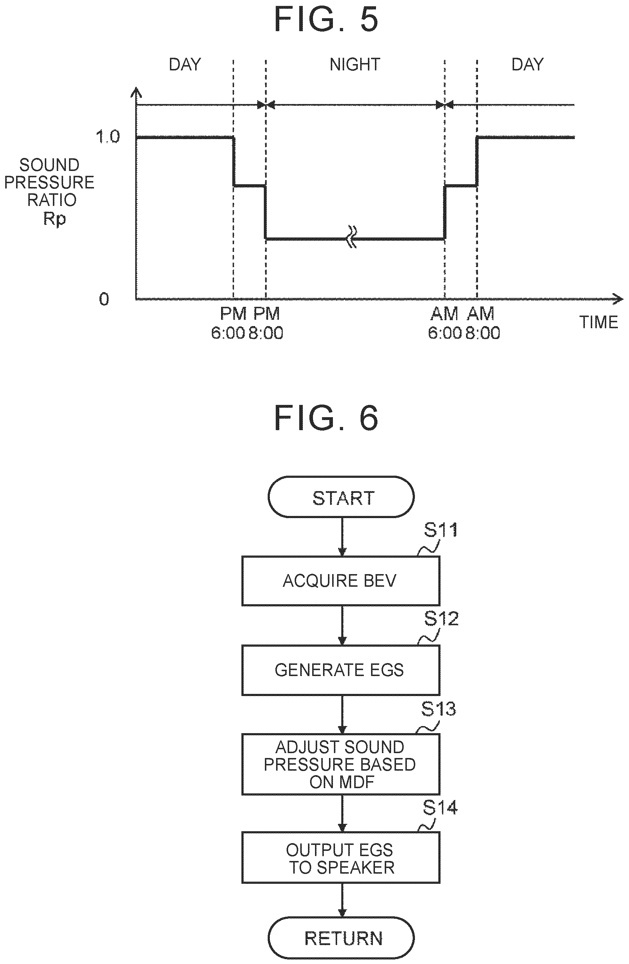

The adjustment instruction MDF is information for adjusting the sound pressure of a pseudo engine sound. The adjustment instruction MDF will be described with reference to FIG. 5. The adjustment instruction MDF is represented by a sound pressure ratio Rp of pseudo engine sounds before and after the adjustment (R = sound pressure after adjustment/sound pressure before adjustment; $0 < R \leq 1$), for example. FIG. 5 illustrates an example of the relationship between the time and the sound pressure ratio Rp. In the example illustrated in FIG. 5, a time (24 hours) corresponding to one day is divided into a day time period and a night time period. The times at the boundary between the day time period and the night time period are 6 am and 8 pm. In the example illustrated in FIG. 5, in addition, a morning time period from 6 am to 8 am and an evening time period from 6 pm to 8 pm are indicated as a part of the day time period.

In the example illustrated in FIG. 5, the sound pressure ratio Rp is highest in the day time period excluding the morning and evening time periods, and the sound pressure ratio Rp is lowest in the night time period. In addition, the sound pressure ratio Rp in the morning and evening time periods is higher than the sound pressure ratio Rp in the night time period, and lower than the sound pressure ratio Rp in the day time period excluding the morning and evening time periods. For example, the sound pressure ratio Rp in the day time period excluding the morning and evening time periods is R = 1.0, the sound pressure ratio Rp in the night time period is R = x ($0 < x < 1.0$), and the sound pressure ratio Rp in the morning and evening time periods is R = y ($x < y < 1.0$).

The sound output control unit 140 outputs the engine sound data EGS received from the engine sound generation unit 130 from the speaker 14. This is the same as the function described in relation to FIG. 2. When the adjustment instruction MDF is received from the time period specifying unit 150, the sound output control unit 140 adjusts the sound pressure of a pseudo engine sound based on the adjustment instruction MDF, and outputs the engine sound data EGS to the speaker 14.

The adjustment of the sound pressure is performed by controlling an amplifier, for example.

1-3. Processing Example

FIG. 6 is a flowchart illustrating the flow of computer processing particularly related to the first embodiment. The flowchart illustrated in FIG. 6 is repeatedly executed in predetermined control cycles by the processor 102 illustrated in FIG. 1.

In the routine illustrated in FIG. 6, first, information BEV is acquired (step S11). As discussed already, the information BEV is information about the battery electric vehicle 10, and includes information about the travel state of the battery electric vehicle 10, information about the travel environment of the battery electric vehicle 10, the virtual engine rotational speed Ne, etc.

Subsequent to the process in step S11, engine sound data EGS are generated (step S12). The engine sound data EGS are generated based on information on the virtual engine rotational speed Ne and the vehicle speed acquired in step S 11. When information on the vehicle type of an engine vehicle specified by the driver has been obtained in the process in step S 11, the engine sound data EGS are generated by combining the information on the vehicle type with the information on the virtual engine rotational speed Ne and the vehicle speed.

Subsequent to the process in step S12, the sound pressure of a pseudo engine sound is adjusted based on the adjustment instruction MDF (step S13). The adjustment instruction MDF is generated based on the time period to which the present time belongs. When the process in step S13 is performed, the sound pressure of a pseudo engine sound produced when the engine sound data EGS generated in step S12 are output from the speaker 14 is adjusted.

In the example illustrated in FIG. 5, the adjustment instruction MDF is represented by the sound pressure ratio Rp ($0 < R \leq 1$). The sound pressure ratio Rp in the night time period is lower than that in the day time period. Therefore, when the present time belongs to the night time period, the sound pressure of a pseudo engine sound is reduced compared to that at the time when the present time belongs to the day time period. More specifically, the sound pressure ratio Rp is lowest in the night time period. Therefore, the sound pressure of a pseudo engine sound is lowest in the course of a day when the present time belongs to the night time period.

In the example illustrated in FIG. 5, in addition, the sound pressure ratio Rp in the morning and evening time periods is lower than the sound pressure ratio Rp in the day time period excluding these time periods, and higher than the sound pressure ratio Rp in the night time period. Therefore, the sound pressure of a pseudo engine sound at the time when the present time belongs to the morning or evening time period is a medium sound pressure that is lower than the sound pressure at the time when the present time belongs to the day time period excluding the morning and evening time periods, and that is higher than the sound pressure at the time when the present time belongs to the night time period.

Subsequent to the process in step S13, the engine sound data EGS are output to the speaker 14 (step S14).

1-4. Effects

According to the first embodiment, the engine sound data EGS are output from the speaker 14. Thus, the driver of the battery electric vehicle 10 can be provided with an ambiance that makes him/her feel as if he/she were driving a real engine vehicle. In addition, the sound pressure of a pseudo engine sound produced when the engine sound data EGS are output from the speaker 14 is adjusted based on the time period to which the present time belongs. Therefore, it is possible to adjust the sound pressure of a pseudo engine sound according to the time period to which the present time belongs, such as not reducing the sound pressure when the present time belongs to the day time period but reducing the sound pressure when the present time belongs to the night time period. Thus, it is possible to support the driver in driving safely when the present time belongs to the night time period while providing the driver with an ambiance at all times by outputting the pseudo engine sound.

With the first embodiment, in addition, it is also possible to reduce the sound pressure of a pseudo engine sound when the present time is in the evening time period compared to the preceding time period, and to increase the sound pressure of a pseudo engine sound when the present time is in the morning time period compared to the preceding time period. Therefore, the sound pressure of a pseudo engine sound can be changed in three stages when the battery electric vehicle 10 is continuously driven during a time period that extends since before the morning or evening time period until after the same time period. Thus, it is also possible to reduce the sense of discomfort felt by the driver as the sound pressure of a pseudo engine sound is changed, compared to when the sound pressure is changed in two stages between the day time period and the night time period.

1-5. Application to Battery Electric Vehicle with Manual Mode (MT Mode)

Electric motors that are used as power units for travel in general battery electric vehicles are significantly different in torque characteristics from internal combustion engines that are used as power units for travel in conventional vehicles (CVs). Due to the difference in the torque characteristics of the power units, the battery electric vehicles generally do not include a transmission, while the CVs inevitably include a transmission. As a matter of course, general battery electric vehicles do not include a manual transmission (MT) in which the gear ratio is switched by a manual operation by a driver. Therefore, there is a significant difference in driving feel between driving of the conventional vehicles with an MT (hereinafter also referred to as "MT vehicles") and driving of the battery electric vehicles.

On the other hand, torque of electric motors can be controlled relatively easily by controlling an applied voltage or a magnetic field. Thus, it is possible to obtain desired torque characteristics within the operating range of the electric motors by appropriately controlling the electric motors. By making use of this feature, torque characteristics peculiar to the MT vehicles can be simulated by controlling torque of the battery electric vehicles. In addition, the battery electric vehicles can be provided with a pseudo shifter so that the driver can obtain a driving feel that is similar to that of the MT vehicles. These enable the battery electric vehicles to simulate the MT vehicles.

That is, in the battery electric vehicles, an output of the electric motor is controlled so as to simulate torque characteristics peculiar to the MT vehicles. The driver performs a pseudo manual shifting operation by operating the pseudo shifter. In response to the pseudo manual shifting operation by the driver, the battery electric vehicle changes torque characteristics by simulating an MT vehicle. This allows the driver of the battery electric vehicle to feel as if he/she were driving an MT vehicle. A control mode for an electric motor for simulating manual shifting operation of an MT vehicle will be hereinafter referred to as a "manual mode" or an "MT mode".

The battery electric vehicle 10 according to the present disclosure may include such a manual mode (MT mode). In the MT mode, the battery electric vehicle 10 generates a pseudo engine sound that matches driving operations by the driver, and outputs the pseudo engine sound from the speaker 70. Since not only driving operations of an MT vehicle but also an engine sound of an MT vehicle is reproduced, the satisfaction of the driver that seeks for reality is enhanced.

Examples of the configuration of the battery electric vehicle 10 with the manual mode (MT mode) will be described below.

1-5-1. First Configuration Example

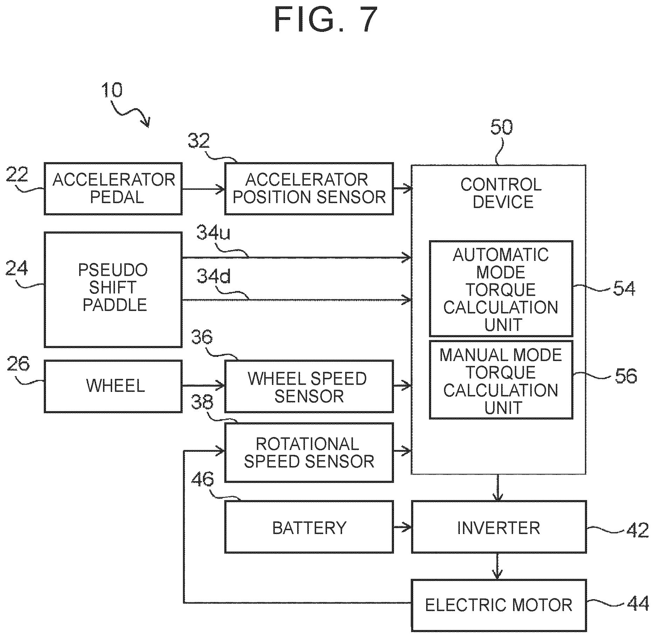

FIG. 7 is a block diagram illustrating a first example of the configuration of a power control system of the battery electric vehicle 10. The battery electric vehicle 10 includes an electric motor 44, a battery 46, and an inverter 42. The electric motor 44 is a power unit for travel. The battery 46 stores electrical energy to drive the electric motor 44. That is, the battery electric vehicle 10 is a battery electric vehicle (BEV) that travels on the electrical energy stored in the battery 46. During acceleration, the inverter 42 converts DC power input from the battery 46 into drive power for the electric motor 44. During deceleration, meanwhile, the inverter 42 converts regenerative power input from the electric motor 44 into DC power to be charged in the battery 46.

The battery electric vehicle 10 includes an accelerator pedal 22 that is used by the driver to input an acceleration request to the battery electric vehicle 10. The accelerator pedal 22 is provided with an accelerator position sensor 32 that detects an accelerator operation amount.

The battery electric vehicle 10 includes a pseudo shift paddle 24. The pseudo shift paddle 24 is a dummy that is different from a real paddle-type shifter. The pseudo shift paddle 24 is structured to resemble shift paddles provided in MT vehicles with no clutch pedal. The pseudo shift paddle 24 is attached to a steering wheel. The pseudo shift paddle 24 includes an upshift switch and a downshift switch that are used to determine an operation position. An upshift signal 34u is generated when the upshift switch is pulled forward, and a downshift signal 34d is generated when the downshift switch is pulled forward.

A wheel 26 of the battery electric vehicle 10 is provided with a wheel speed sensor 36. The wheel speed sensor 36 is used as a vehicle speed sensor that detects the vehicle speed of the battery electric vehicle 10. In addition, the electric motor 44 is provided with a rotational speed sensor 38 that detects the rotational speed of the electric motor 44.

The battery electric vehicle 10 includes a control device 50. The control device 50 is typically an electronic control unit (ECU) mounted on the battery electric vehicle 10. The control device 50 may be a combination of a plurality of ECUs. The control device 50 includes an interface, a memory, and a processor. An in-vehicle network is connected to the interface. The memory includes a random access memory (RAM) that temporarily stores data and a read only memory (ROM) that stores programs that are executable by the processor and a variety of data associated with the programs. The programs are composed of a plurality of instructions. The processor reads the programs and the data from the memory, executes the programs, and generates a control signal based on signals acquired from sensors.

For example, the control device 50 controls the electric motor 44 through pulse width modulation (PWM) control of the inverter 42. Signals from the accelerator position sensor 32, the pseudo shift paddle 24, the wheel speed sensor 36, and the rotational speed sensor 38 (the upshift signal 34u and the downshift signal 34d as signals from the pseudo shift paddle 24) are input to the control device 50. The control device 50 processes these signals, and calculates a motor torque instruction value to be used for PWM control of the inverter 42.

The control device 50 includes an automatic mode (EV mode) and a manual mode (MT mode) as control modes. The automatic mode is a normal control mode for driving the battery electric vehicle 10 as a general battery electric vehicle. The automatic mode is programmed to continuously vary an output of the electric motor 44 according to an operation of the accelerator pedal 22. On the other hand, the manual mode is a control mode for driving the battery electric vehicle 10 as an MT vehicle. The manual mode is programmed to vary the output characteristics of the electric motor 44 for an operation of the accelerator pedal 22 according to an upshift operation and a downshift operation of the pseudo shift paddle 24. That is, the manual mode is a control mode in which the output of the electric motor 44 can be varied in response to a driving operation of a vehicle constituent element other than the accelerator pedal 22 or the brake pedal. The automatic mode (EV mode) and the manual mode (MT mode) are switchable.

The control device 50 includes an automatic mode torque calculation unit 54 and a manual mode torque calculation unit 56. Each of the units 54, 56 may be an independent ECU, or may be a function of an ECU obtained by a processor executing a program stored in a memory.

The automatic mode torque calculation unit 54 includes a function to calculate motor torque at the time when the electric motor 44 is controlled in the automatic mode. The automatic mode torque calculation unit 54 stores a motor torque instruction map. The motor torque instruction map is a map that is used to determine motor torque from the accelerator operation amount and the rotational speed of the electric motor 44. A signal from the accelerator position sensor 32 and a signal from the rotational speed sensor 38 are input as parameters for the motor torque instruction map. The motor torque instruction map outputs motor torque corresponding to these signals. For this reason, even if the driver operates the pseudo shift paddle 24 in the automatic mode, such an operation is not reflected in the motor torque.

The manual mode torque calculation unit 56 includes an MT vehicle model. The MT vehicle model is a model for calculating drive wheel torque that should be obtained through operations of the accelerator pedal 22 and the pseudo shift paddle 24 on the assumption that the battery electric vehicle 10 is an MT vehicle.

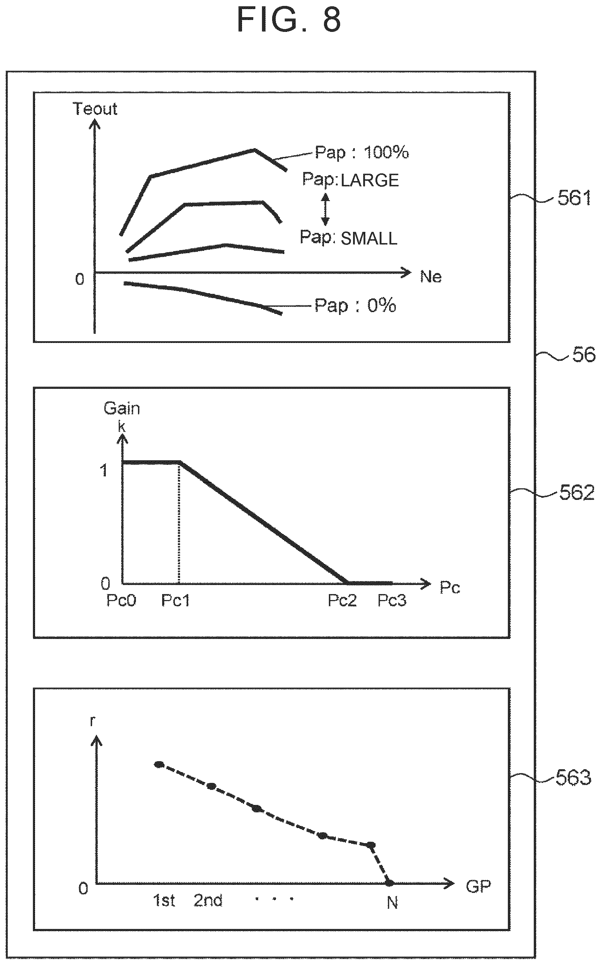

The MT vehicle model of the manual mode torque calculation unit 56 will be described with reference to FIG. 8. As illustrated in FIG. 8, the MT vehicle model includes an engine model 561, a clutch model 562, and a transmission model 563. An engine, a clutch, and a transmission virtually implemented by the MT vehicle model will be referred to as a "virtual engine", a "virtual clutch", and a "virtual transmission", respectively. The engine model 561 models the virtual engine. The clutch model 562 models the virtual clutch. The transmission model 563 models the virtual transmission.

The engine model 561 is used to calculate a virtual engine rotational speed Ne and virtual engine output torque Teout. The virtual engine rotational speed Ne is calculated based on a rotational speed Nw of the wheel, a total speed reduction ratio R, and a slip rate Rslip of the virtual clutch. For example, the virtual engine rotational speed Ne is represented by the following equation (1).

$$Ne = Nw \times R/(1 - Rslip) \ ..... \ \text{Equation (1)}$$

The virtual engine output torque Teout is calculated from the virtual engine rotational speed Ne and an accelerator operation amount Pap. The virtual engine output torque Teout is calculated using a map that prescribes the relationship among the accelerator operation amount Pap, the virtual engine rotational speed Ne, and the virtual engine output torque Teout as indicated in FIG. 8. In this map, the virtual engine output torque Teout is given with respect to the virtual engine rotational speed Ne for each accelerator operation amount Pap. The torque characteristics indicated in FIG. 8 may be set to characteristics assumed for a gasoline engine, or may be set to characteristics assumed for a diesel engine. In addition, the torque characteristics may be set to characteristics assumed for a naturally aspirated engine, or may be set to characteristics assumed for a supercharged engine.

The clutch model 562 is used to calculate a torque transfer gain k. The torque transfer gain k is a gain for calculating the degree of transfer of torque of the virtual clutch according to a virtual clutch operation amount Pc. The virtual clutch operation amount Pc is normally 0%, and is temporarily increased to 100% in conjunction with switching of the virtual gear position of the virtual transmission. The clutch model 562 has a map as indicated in FIG. 8. In this map, the torque transfer gain k is given with respect to the virtual clutch operation amount Pc. In FIG. 8, Pc0 corresponds to a position at which the virtual clutch operation amount Pc is 0%, and Pc3 corresponds to a position at which the virtual clutch operation amount Pc is 100%. A range from Pc0 to Pc1 and a range from Pc2 to Pc3 are dead bands in which the torque transfer gain k is not varied according to the virtual clutch operation amount Pc. The clutch model 562 is used to calculate clutch output torque Teout using the torque transfer gain k. The clutch output torque Teout is torque output from the virtual clutch. For example, the clutch output torque Teout is given as the product of the virtual engine output torque Teout and the torque transfer gain k (Tcout = Teout × k).

The clutch model 562 is also used to calculate the slip rate Rslip. The slip rate Rslip is used by the engine model 561 to calculate the virtual engine rotational speed Ne. The slip rate Rslip can be calculated using a map in which the slip rate Rslip is given with respect to the virtual clutch operation amount Pc, as with the torque transfer gain k.

The transmission model 563 is used to calculate a gear ratio r. The gear ratio r is a gear ratio determined by a virtual gear position GP in the virtual transmission. The virtual gear position GP is upshifted by one position when an upshift operation of the pseudo shift paddle 24 is received. On the other hand, the virtual gear position GP is downshifted by one position when a downshift operation of the pseudo shift paddle 24 is received.

The transmission model 563 has a map as indicated in FIG. 8. In this map, the gear ratio r is given with respect to the virtual gear position GP such that the gear ratio r becomes lower as the virtual gear position GP becomes higher. The transmission model 563 is used to calculate transmission output torque Tgout using the gear ratio r obtained from the map and the clutch output torque Tcout. For example, the transmission output torque Tgout is given as the product of the clutch output torque Tcout and the gear ratio r (Tgout = Tcout $\times$ r). The transmission output torque Tgout is non-continuously varied according to switching of the gear ratio r. These non-continuous variations in the transmission output torque Tgout cause shift shocks, allowing the vehicle to act like a vehicle with a stepped transmission.

The MT vehicle model is used to calculate drive wheel torque Tw using a predetermined speed reduction ratio rr. The speed reduction ratio rr is a fixed value determined by the mechanical structure from the virtual transmission to drive wheels. A value obtained by multiplying the speed reduction ratio rr by the gear ratio r is the total speed reduction ratio R discussed earlier. The MT vehicle model is used to calculate the drive wheel torque Tw from the transmission output torque Tgout and the speed reduction ratio rr. For example, the drive wheel torque Tw is given as the product of the transmission output torque Tgout and the speed reduction ratio rr (Tw = Tgout $\times$ rr).

The control device 50 converts the drive wheel torque Tw calculated using the MT vehicle model into required motor torque Tm. The required motor torque Tm is motor torque required to achieve the drive wheel torque Tw calculated using the MT vehicle model. The drive wheel torque Tw is converted into the required motor torque Tm using the speed reduction ratio from an output shaft of the electric motor 44 to the drive wheels. Then, the control device 50 controls the electric motor 44 by controlling the inverter 42 according to the required motor torque Tm.

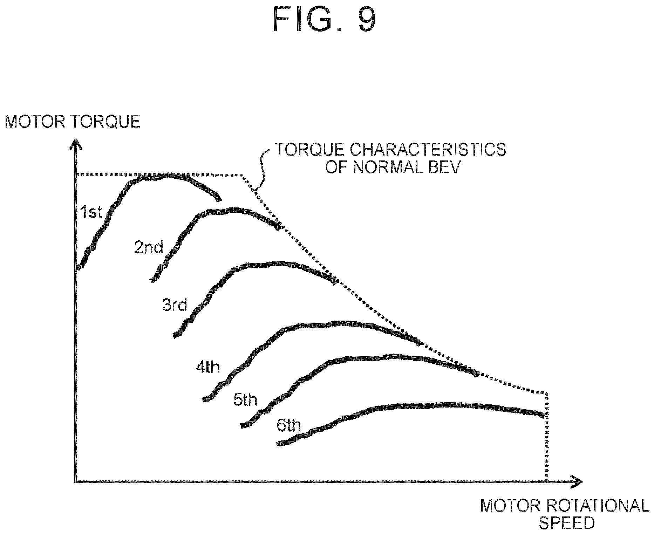

FIG. 9 illustrates the torque characteristics of the electric motor 44 achieved through motor control performed using the MT vehicle model, in comparison to the torque characteristics of the electric motor 44 achieved through normal motor control for a battery electric vehicle (BEV). With the motor control performed using the MT vehicle model, as indicated in FIG. 9, it is possible to achieve torque characteristics (solid lines in the drawing) that simulate the torque characteristics of an MT vehicle according to virtual gear positions set by the pseudo shift paddle 24. In FIG. 9, the number of gear positions is six.

1-5-2. Second Configuration Example

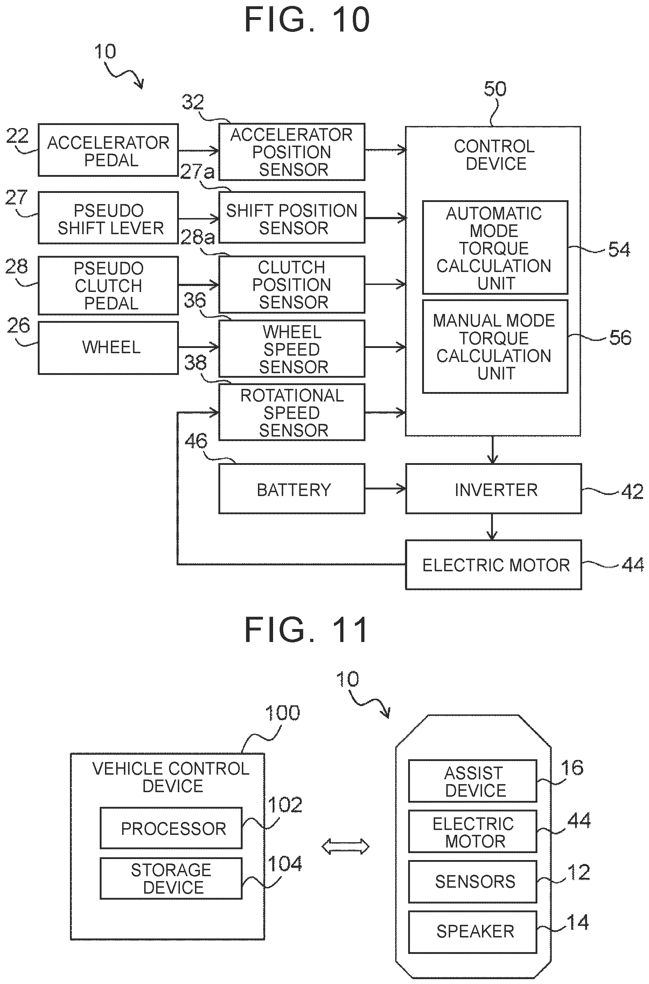

FIG. 10 is a block diagram illustrating a second example of the configuration of the power control system of the battery electric vehicle 10. Here, only components that are different from those according to the first configuration example discussed above will be described. Specifically, in the second configuration example, the battery electric vehicle 10 includes a pseudo shift lever 27 and a pseudo clutch pedal 28, in place of the pseudo shift paddle 24 provided in the first configuration example. The pseudo shift lever 27 and the pseudo clutch pedal 28 are dummies that are different from a real shift lever and clutch pedal.

The pseudo shift lever 27 is structured to simulate a shift lever provided in an MT vehicle. The arrangement and the operating feel of the pseudo shift lever 27 are equivalent to those in an actual MT vehicle. The pseudo shift lever 27 is provided with positions corresponding to gear positions of first speed, second speed, third speed, fourth speed, fifth speed, sixth speed, reverse, and neutral, for example. The pseudo shift lever 27 is provided with a shift position sensor 27a that detects a gear position by determining which position the pseudo shift lever 27 is in.

The pseudo clutch pedal 28 is structured to simulate a clutch pedal provided in an MT vehicle. The arrangement and the operating feel of the pseudo clutch pedal 28 are equivalent to those in an actual MT vehicle. The pseudo clutch pedal 28 is operated when operating the pseudo shift lever 27. That is, the driver depresses the pseudo clutch pedal 28 when it is desired to change the setting of the gear position using the pseudo shift lever 27, and stops depressing the pseudo clutch pedal 28 and returns the pseudo clutch pedal 28 to the original position when the change in the setting of the gear position is finished. The pseudo clutch pedal 28 is provided with a clutch position sensor 28a that detects the amount of depression of the pseudo clutch pedal 28.

Signals from the accelerator position sensor 32, the shift position sensor 27a, the clutch position sensor 28a, the wheel speed sensor 36, and the rotational speed sensor 38 are input to the control device 50. The control device 50 processes these signals, and calculates a motor torque instruction value to be used for PWM control of the inverter 42.

The control device 50 includes an automatic mode and a manual mode as control modes, as in the first configuration example discussed above. The automatic mode is programmed to continuously vary an output of the electric motor 44 according to an operation of the accelerator pedal 22. On the other hand, the manual mode is a control mode for driving the battery electric vehicle 10 as an MT vehicle. The manual mode is programmed to vary the output of the electric motor 44 for an operation of the accelerator pedal 22 according to operations of the pseudo clutch pedal 28 and the pseudo shift lever 27. That is, the manual mode is a control mode in which the output of the electric motor 44 can be varied in response to driving operations of vehicle constituent elements other than the accelerator pedal 22 or the brake pedal.

The vehicle model of the manual mode torque calculation unit 56 is the same as that illustrated in FIG. 8.

However, the virtual clutch operation amount Pc is replaced with the amount of depression of the pseudo clutch pedal 28 detected by the clutch position sensor 28a. In addition, the virtual gear position GP is determined according to the position of the pseudo shift lever 27 detected by the shift position sensor 27a.

## 2. Second Embodiment

### 2-1. Overall Configuration

FIG. 11 is a conceptual diagram illustrating a battery electric vehicle 10 according to a second embodiment of the present disclosure and a vehicle control device 100 to be applied to the battery electric vehicle 10. In the example illustrated in FIG. 11, the battery electric vehicle 10 includes an assist device 16. The assist device 16 is a device that acts on the acceleration feel of the driver of the battery electric vehicle 10. The assist device 16 is provided in the cabin of the battery electric vehicle 10. Examples of the assist device 16 include a lighting device and a seat ventilation device.

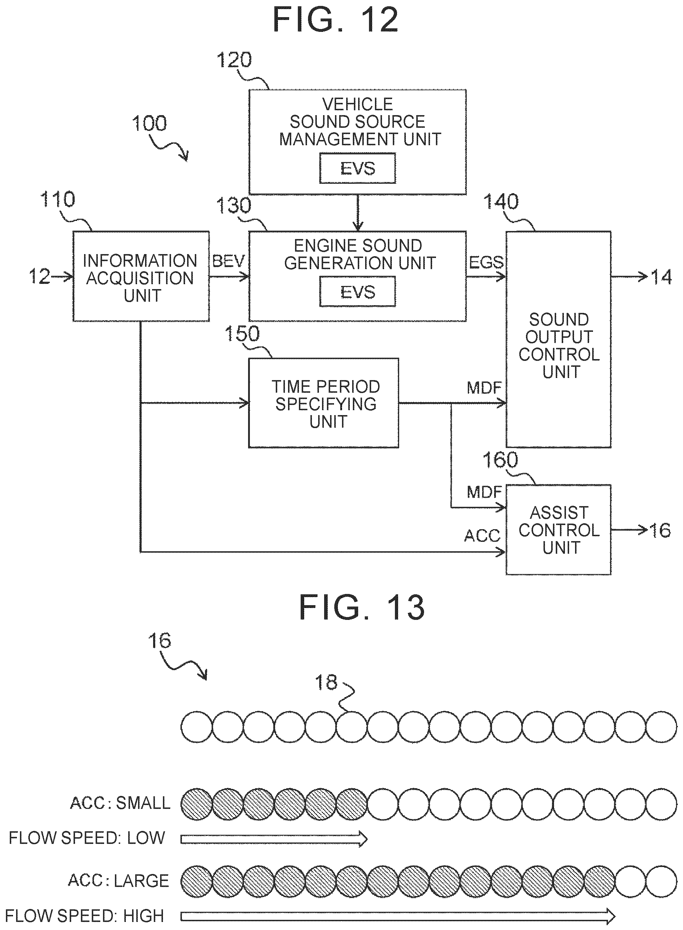

The lighting device includes a plurality of light emitting diode (LED) lamps 18 (see FIG. 13). The LED lamps 18 are arranged on surfaces of right and left doors, for example. In another example, the LED lamps 18 are arranged on a ceiling surface. In still another example, the LED lamps 18 are arranged on a console. When the LED lamps 18 are arranged at these locations, the LED lamps 18 are arranged in the front-rear direction of the battery electric vehicle 10, for example. In yet another example, the lighting device is disposed on a dashboard. In this case, the LED lamps 18 are arranged in the lateral direction or the front-rear direction of the battery electric vehicle 10, for example. The seat ventilation device is provided in at least a backrest portion of a driver's seat. The seat ventilation device includes an electric fan that takes in air through a surface of the backrest portion. One or two or more electric fans may be provided in total.

### 2-2. Assist for Acceleration

In the first embodiment, the sound pressure of a pseudo engine sound is adjusted based on the time period to which the present time belongs. Specifically, an adjustment is made so as to reduce the sound pressure of a pseudo engine sound when the present time belongs to the night time period. An adjustment is made so as to reduce the sound pressure of a pseudo engine sound also when the present time belongs to the morning or evening time period. This may render the acceleration feel of the driver different between a time period for which an adjustment is made so as to reduce the sound pressure and a time period for which no such adjustment is made. Thus, in the second embodiment, operation control for the assist device is performed based on the front-rear acceleration of the battery electric vehicle 10 in a time period for which an adjustment is made so as to reduce the sound pressure of a pseudo engine sound.

FIG. 12 is a block diagram illustrating an example of the functional configuration of the vehicle control device 100 particularly related to the second embodiment. In the example illustrated in FIG. 12, the vehicle control device 100 includes an assist control unit 160, in addition to the functional blocks illustrated in FIG. 4. These functional blocks are implemented through cooperation of the processor 102 and the storage device 104, for example.

The assist control unit 160 performs operation control for the assist device 16 based on the adjustment instruction MDF and a front-rear acceleration ACC of the battery electric vehicle 10. The adjustment instruction MDF has been transmitted from the time period specifying unit 150 to the assist control unit 160. The front-rear acceleration ACC has been transmitted from the information acquisition unit 110 to the assist control unit 160.

FIG. 13 illustrates operation control performed when the assist device 16 is a lighting device. In the example illustrated in FIG. 13, flashing control for the LED lamps 18 is performed. The LED lamps 18 are components corresponding to the "plurality of light source units" according to the present disclosure. In the flashing control, the turn-on timings of the LED lamps 18 are individually controlled such that the LED lamps are turned on sequentially along the direction of arrangement of the LED lamps.

In the flashing control based on the adjustment instruction MDF and the front-rear acceleration ACC, the speed at which the LED lamps 18 are sequentially turned on (hereinafter also referred to as an "LED lamp flow speed") is controlled. When the adjustment instruction MDF is represented by the sound pressure ratio Rp discussed above, the LED lamp flow speed is controlled according to the front-rear acceleration ACC in time periods in which the sound pressure ratio Rp is less than 1.0 (i.e. the night, morning, and evening time periods). Specifically, when the present time is in the night, morning, or evening time period, the turn-on timings of the LED lamps 18 are controlled such that the LED lamp flow speed increases as the front-rear acceleration ACC becomes larger.

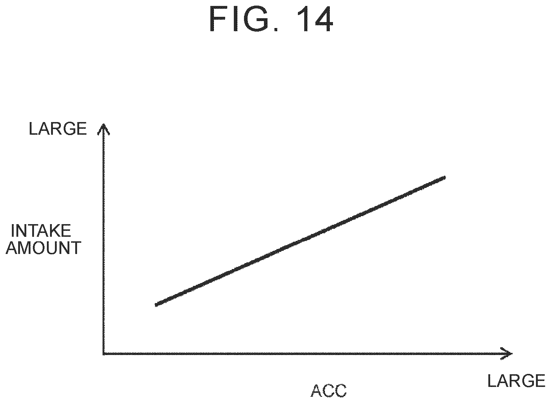

When the assist device 16 is a seat ventilation device, control is performed for the amount of air taken in by the electric fan. FIG. 14 illustrates operation control performed when the assist device 16 is a seat ventilation device. FIG. 14 illustrates an example of the relationship between the front-rear acceleration ACC and the air intake amount. In the example illustrated in FIG. 14, the air intake amount increases in proportion to the front-rear acceleration ACC.

In the intake amount control based on the adjustment instruction MDF and the front-rear acceleration ACC, the rotational speed of the electric fan is controlled based on the relationship illustrated in FIG. 14. When the adjustment instruction MDF is represented by the sound pressure ratio Rp discussed above, the rotational speed of the electric fan is controlled such that the air intake amount increases as the front-rear acceleration ACC becomes larger in time periods in which the sound pressure ratio Rp is less than 1.0 (i.e. the night, morning, and evening time periods). This intake amount control may be executed in combination with the flashing control discussed above.

2-3. Effects

In the second embodiment, operation control for the assist device 16 is performed in time periods in which an adjustment is made so as to reduce the sound pressure of a pseudo engine sound. When the operation control is performed, it is possible to compensate for the loss of the acceleration feel of the driver due to an adjustment made so as to reduce the sound pressure of a pseudo engine sound.

**Claims**

1. A vehicle control method to be applied to a battery electric vehicle (10) that uses an electric motor (44) as a power unit for travel and that includes a processor (102), the vehicle control method comprising:

    generating, by the processor (102), a pseudo engine sound to be output from a cabin speaker (14) of the battery electric vehicle (10) based on operation information for a constituent element of the battery electric vehicle (10); adjusting, by the processor (102), a sound pressure of the pseudo engine sound based on a time period to which a present time belongs, and outputting the pseudo engine sound from the cabin speaker (14); and making, by the processor (102), an adjustment so as to reduce the sound pressure of the pseudo engine sound when the present time belongs to a night time period, compared to when the present time belongs to a day time period.

2. The vehicle control method according to claim 1, further comprising:

    acquiring, by the processor (102), a front-rear acceleration of the battery electric vehicle (10); and performing, by the processor (102), operation control for an assist device (16) based on the front-rear acceleration when the present time belongs to the night time period, the assist device (16) being provided in a cabin of the battery electric vehicle (10) and acting on an acceleration feel of a driver of the battery electric vehicle (10).

3. The vehicle control method according to claim 2, wherein:

    the assist device (16) includes a plurality of light source units arranged in the cabin of the battery electric vehicle (10); the operation control includes flashing control for the light source units (18); and the performing of the operation control includes controlling the light source units (18) such that the light source units (18) are turned on sequentially along a direction of arrangement of the light source units (18) and a speed at which the light source units (18) are sequentially turned on increases as the front-rear acceleration becomes larger.

4. The vehicle control method according to claim 2, wherein:

    the assist device (16) includes an electric fan provided in a backrest portion of a driver's seat of the battery electric vehicle (10) to take in air through a surface of the backrest portion; the operation control includes control for an amount of air taken in by the electric fan; and the performing of the operation control includes controlling the electric fan such that the amount of air taken in becomes larger as the front-rear acceleration becomes larger.

5. The vehicle control method according to claim 1, wherein:

    the day time period includes morning and evening time periods; and an adjustment is made so as to reduce the sound pressure of the pseudo engine sound when the present time belongs to the morning or evening time period, compared to when the present time belongs to the day time period excluding the morning and evening time periods.

6. The vehicle control method according to claim 5, further comprising:

    acquiring, by the processor (102), a front-rear acceleration of the battery electric vehicle (10); and performing, by the processor (102), operation control for an assist device (16) based on the front-rear acceleration when the present time belongs to the morning or evening time period, the assist device (16) being provided in a cabin of the battery electric vehicle (10) and acting on an acceleration feel of a driver of the battery electric vehicle (10).

7. The vehicle control method according to any one of claims 1 to 6, wherein the constituent element includes an accelerator pedal (22) and a pseudo shift paddle (24).

8. The vehicle control method according to any one of claims 1 to 6, wherein the constituent element includes an accelerator pedal (22), a pseudo clutch pedal (28), and a pseudo shift lever (27).

9. A vehicle control device (100) to be applied to a battery electric vehicle (10) that uses an electric motor (44) as a power unit for travel, the vehicle control device (100) comprising a processor (102) that performs various processes, wherein:

> the processor (102) is configured to generate a pseudo engine sound to be output from a cabin speaker (14) of the battery electric vehicle (10) based on operation information for a constituent element of the battery electric vehicle (10);
> the processor (102) is configured to adjust a sound pressure of the pseudo engine sound based on a time period to which a present time belongs, and to output the pseudo engine sound to the cabin speaker (14); and
> the processor (102) is configured to make an adjustment so as to reduce the sound pressure of the pseudo engine sound when the present time belongs to a night time period, compared to when the present time belongs to a day time period.

10. A battery electric vehicle (10) that uses an electric motor (44) as a power unit for travel, the battery electric vehicle (10) comprising:

> a cabin speaker (14); and
> a processor (102) that performs various processes, wherein:

>> the processor (102) is configured to generate a pseudo engine sound to be output from a cabin speaker (14) of the battery electric vehicle (10) based on operation information for a constituent element of the battery electric vehicle (10);
>> the processor (102) is configured to adjust a sound pressure of the pseudo engine sound based on a time period to which a present time belongs, and to output the pseudo engine sound to the cabin speaker (14); and
>> the processor (102) is configured to make an adjustment so as to reduce the sound pressure of the pseudo engine sound when the present time belongs to a night time period, compared to when the present time belongs to a day time period.

# FIG. 1

# FIG. 2

# FIG. 3

# FIG. 4

# FIG. 5

DAY | NIGHT | DAY

SOUND PRESSURE RATIO Rp

1.0

0

PM PM
6:00 8:00

AM AM
6:00 8:00

TIME

# FIG. 6

START

ACQUIRE BEV — S11

GENERATE EGS — S12

ADJUST SOUND PRESSURE BASED ON MDF — S13

OUTPUT EGS TO SPEAKER — S14

RETURN

# FIG. 7

# FIG. 8

# FIG. 9

MOTOR TORQUE

TORQUE CHARACTERISTICS
OF NORMAL BEV

1st

2nd

3rd

4th

5th

6th

MOTOR ROTATIONAL
SPEED

# FIG. 10

# FIG. 11

# FIG. 12

120

VEHICLE
SOUND SOURCE
MANAGEMENT UNIT

EVS

100

110

INFORMATION
ACQUISITION
UNIT

12→

BEV

130

ENGINE SOUND
GENERATION UNIT

EVS

EGS

140

SOUND
OUTPUT
CONTROL
UNIT

→14

150

TIME PERIOD
SPECIFYING
UNIT

MDF

160

MDF

ACC

ASSIST
CONTROL
UNIT

→16

# FIG. 13

16

18

ACC : SMALL

FLOW SPEED: LOW

ACC : LARGE

FLOW SPEED: HIGH

# FIG. 14

Europäisches
Patentamt

European
Patent Office

Office européen
des brevets

**EUROPEAN SEARCH REPORT**

Application Number

EP 24 20 2138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2011 215437 A (NAMCO BANDAI GAMES INC) 27 October 2011 (2011-10-27) | 1,2,5-10 | INV.<br>G10K15/02 |
| A | * figures 1,2,26,31 *<br>* paragraphs [0005], [0019] - [0023], [0030], [0035] - [0044], [0047] - [0049], [0063] - [0065], [0070] - [0076], [0089], [0096] - [0104] *<br>* paragraphs [0191] - [0193], [0226], [0227] * | 3,4 | B60Q5/00 |
| | ----- | | |
| X,D | JP 2014 240239 A (PANASONIC CORP) 25 December 2014 (2014-12-25) | 1,7-10 | |
| A | * figures 1-5 *<br>* paragraphs [0001], [0015] - [0028], [0031], [0032], [0045], [0054] - [0059], [0063] - [0069] * | 2-6 | |
| | ----- | | |
| A | US 2016/243983 A1 (TANAKA MASAHIDE [JP]) 25 August 2016 (2016-08-25)<br>* figures 1-6 *<br>* paragraphs [0033] - [0037], [0041] - [0063], [0073] - [0081] * | 1-10 | |
| | ----- | | TECHNICAL FIELDS SEARCHED (IPC)<br><br>B60Q<br>G10K |

The present search report has been drawn up for all claims

| Place of search | Date of completion of the search | Examiner |
|---|---|---|
| The Hague | 18 February 2025 | Sartoni, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 2138

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | Publication date | Patent family member(s) | | Publication date |
|---|---|---|---|---|---|
| JP 2011215437 | A | 27-10-2011 | NONE | | |
| JP 2014240239 | A | 25-12-2014 | NONE | | |
| US 2016243983 | A1 | 25-08-2016 | JP | 2011084224 A | 28-04-2011 |
| | | | US | 2011093149 A1 | 21-04-2011 |
| | | | US | 2014379192 A1 | 25-12-2014 |
| | | | US | 2016243983 A1 | 25-08-2016 |
| | | | US | 2018201185 A1 | 19-07-2018 |
| | | | US | 2021094468 A1 | 01-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011215437 A
- JP 2014240239 A